(19) Europäisches Patentamt

European Patent Office

Office européen des brevets

(11) **EP 1 645 720 A1**

(12) **EUROPEAN PATENT APPLICATION**

(43) Date of publication:
**12.04.2006 Bulletin 2006/15**

(51) Int Cl.:
*F01D 5/14* (2006.01)    *F01D 5/16* (2006.01)

(21) Application number: **05256226.1**

(22) Date of filing: **05.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.10.2004 US 959450**

(71) Applicant: Honeywell International Inc.
Morristown, New Jersey 07960 (US)

(72) Inventors:
• **Kincheloe, Todd A.**
**AZ 85204 (US)**
• **Gentile, David P.**
**Chandler, AZ 85248 (US)**

(74) Representative: **Hucker, Charlotte Jane**
**Gill Jennings & Every LLP**
**Broadgate House**
**7 Eldon Street**
**London EC2M 7LH (GB)**

(54) **Frequency tailored blade thickness for a turbomachinewheel**

(57)    A method is provided for determining a blade topology that reduces the effects of vibratory stress on a turbomachine blade (104) having a plurality of discrete locations, wherein each discrete location has a thickness. The method includes the steps of creating a computational model of the blade, using the computational model to modify the thickness of at least one of the discrete locations a predetermined amount, determining a combination of a discrete location and predetermined thickness amount that reduces vibratory stress on the blade, and applying the determined combination to the computational model to create a revised blade. A turbomachine including a blade having the determined blade topology is also provided.

FIG. 2

**Description**

TECHNICAL FIELD

The present invention relates to turbomachines and, more particularly, to a blade of a turbine wheel.

BACKGROUND

Turbomachines are used in myriad applications, including in air turbine starters used in aircraft engines. Typically, a turbomachine includes a turbine wheel comprised of a plurality of turbine blades that are each mounted to a rotor. Generally, each blade is similarly sized and shaped. The turbine blades are spaced apart and positioned such that the rotor rotates when a pressure differential is created across the two sides of the turbine wheel.

During a start cycle, the turbine blades may experience periodic mechanical and/or aerodynamic excitation from various sources, such as from flow irregularities emanating from upstream or downstream blade rows, gear mesh clatter, and imperfections that may be present in one or more of the turbine blades, the rotor itself, or other sections of the turbomachine. Turbine blades also have natural modes of vibration that are characterized by a natural frequency and an associated mode shape. Consequently, when the excitation and natural frequencies coincide, the turbine blades, rotor, or sections of the turbomachine may begin to vibrate, potentially causing damage to and/or shortening of the life of the turbine wheel.

Various attempts have been made in the past to decrease turbine blade vibration levels. For example, some designs add or remove material from various sections of the blades, such as from the tips and/or mid-sections to alter the frequencies of the entire set of blades in a similar manner. Other designs replace existing turbine blades with new blades having a different shape. Yet other designs focus on detuning the assembled rotor, wherein blades of significantly different natural frequency are arranged in a specific pattern on the rotor. Some detuned designs use alternating blade shape patterns to alter the blades' natural frequencies. Yet other designs have included drilling cavities into the body of the blade in alternating patterns in order to alter the blades' frequencies.

Although the above-mentioned modifications may effectively address problematic frequencies, they may unintentionally intensify the response of hitherto secondary (lower responding) modes or may create new resonant responses altogether. Specifically, the past methods suggest solutions to cure present defects by relying on trial and error, rather than systematically addressing a known problematic response. Consequently, these subsequently tuned turbine blades may exhibit other undesirable operational behaviors, including but not limited to, other potential unacceptable vibrational responses, reduced aerodynamic performance, and/or deterioration.

Therefore, there is a need for a method and blade design that specifically addresses the problematic vibratory response while minimizing impact on acceptable responses (side effects). Additionally, it is desirable that the blade design be implemented during manufacture of a turbine wheel. The present invention addresses one or more of these needs.

BRIEF SUMMARY

The present invention provides a turbomachine wheel including a hub and a plurality of blades. The plurality of blades extends from the hub. Each blade has a base, a tip, a leading edge, a trailing edge, a first side, a second side, and a thickness between the first and second sides. The thickness of one or more of the blades varies between the base and tip to thereby tune the blade to at least one predetermined frequency.

In one embodiment, and by way of example only, a method is provided for determining a blade topology that reduces the effects of vibratory stress on a turbomachine blade having a plurality of discrete locations, wherein each discrete location has a thickness. The method includes the steps of creating a computational model of the blade, using the computational model to modify the thickness of at least one of the discrete locations a predetermined amount, determining a combination of a discrete location and predetermined thickness amount that reduces vibratory stress on the blade, and applying the determined combination to the computational model to create a revised blade.

Other independent features and advantages of the preferred blade and method will become apparent from the following detailed description, taken in conjunction with the accompanying drawings which illustrate, by way of example, the principles of the invention.

BRIEF DESCRIPTION OF THE DRAWINGS

FIG. 1 is a perspective view of an exemplary turbine wheel;
FIG. 2 is a perspective view of an exemplary turbine blade that may extend from the exemplary turbine wheel depicted in FIG. 1; and

FIG. 3 is a flowchart depicting an exemplary method by which to construct a turbine blade, such as the turbine blade of FIG. 2; and

FIG. 4 is an exemplary grid laid upon the blade where thicknesses will be mapped and analyzed using the described method.

DETAILED DESCRIPTION OF A PREFERRED EMBODIMENT

The following detailed description is merely exemplary in nature and is not intended to limit the invention or its application and uses. Furthermore, there is no intention to be bound by any theory presented in the preceding background or the following detailed description. In this regard, before proceeding with the detailed description, it will be appreciated that the present invention is not limited to use with a particular type or configuration of turbine wheel, and it will be appreciated that the embodiments could also be used in conjunction with any wheel having blades extending therefrom and other objects that may be subject to vibration where alternating stress and strains can be accurately measured or predicted during the design of the object.

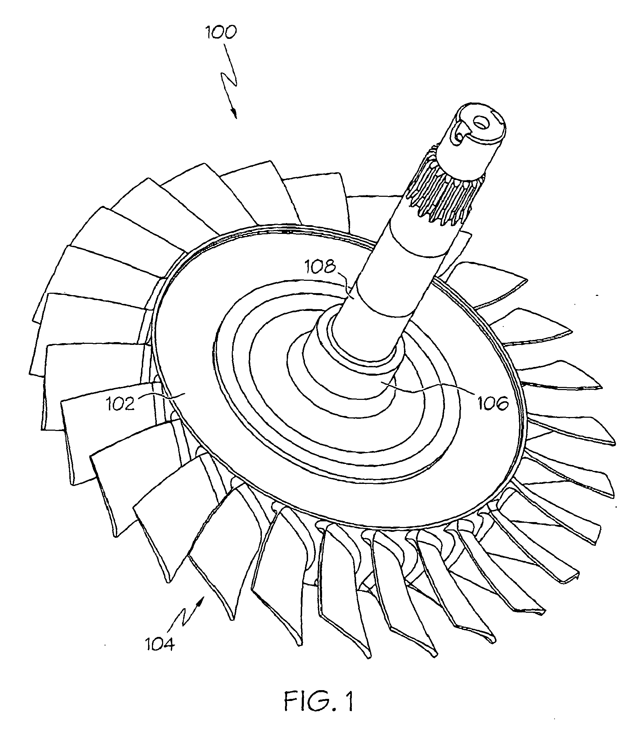

Turning now to FIG. 1, an exemplary turbine wheel 100 is illustrated therein. The turbine wheel 100 includes a hub 102 and a plurality of blades 104 extending therefrom. The hub 102 and plurality of blades 104 are preferably formed from a single piece of material to achieve optimal weight and cost efficiency, however, it will be appreciated that the hub 102 and blades 104 may be separately manufactured and subsequently coupled to one another as well.

The hub 102 is substantially circular in shape and includes an extension 106 protruding from substantially the middle thereof. The extension 106 is configured to receive and mount to a rotor shaft 108, which may be coupled to a non-illustrated power sink or load. When pressurized air (or other working fluid) is supplied to turbine blades 104, the hub 102 rotates and, in turn, rotates the shaft 108, supplying torque and/or power to the non-illustrated power sink or load.

The blades 104 are arranged around the outer periphery of the hub 102, preferably, in a configuration that optimizes the efficiency of the rotating turbine wheel 100. For example, the blades 104 may be equally spaced apart from one another or arranged in a repetitive or a non-repetitive pattern. As illustrated in FIG. 1, the blades 104 each have substantially the same shape, however, it will also be appreciated that the blades 104 may have different shapes.

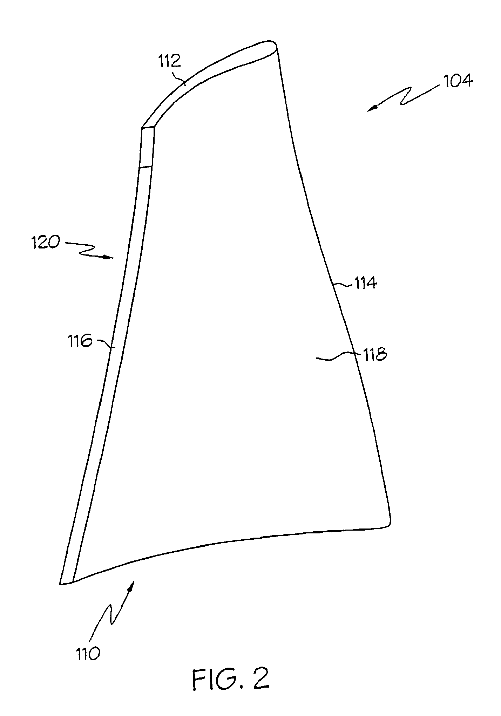

Turning to FIG. 2, an exemplary blade 104 is depicted herein. The blade 104 has a base 110, a tip 112, a leading edge 114, a trailing edge 116, a first side 118, and a second side 120. The blade 104 is configured to efficiently extract work from the working fluid supplied thereto, and to convert it into mechanical torque while simultaneously reducing the effects of known vibratory excitations which may cause stresses to which the blade 104 may be exposed. The blade 104 may also be designed for efficient compression or propulsion of the working fluid, such as in a compressor, a fan, or a propeller. In these regards, the blade 104 may have any one of numerous shapes. For example, in one exemplary embodiment, the blade 104 includes a twist extending from the base 110 to the tip 112. In another exemplary embodiment, the blade 104 is substantially straight from base 110 to tip 112.

To further reduce vibratory stresses within the blade 104, a thickness T, measured between the first side 118 of the blade 104 and the second side 120, may vary between one location on the blade to another location. For example, the thickness T may not be uniform at various points along the leading edge 114 of the blade, and/or at points between the leading edge 114 and trailing edge 116. A turbine blade analysis is performed to determine the degree to which a change in thickness at one location on the blade 104 affects the blade's natural frequencies as compared to another location. The analysis results are used to construct the blade 104. The turbine blade analysis is preferably executed according a method that will now be discussed in detail.

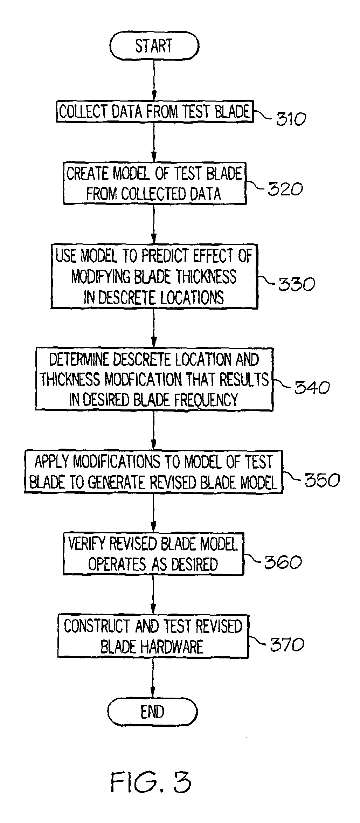

With reference to FIG. 3, a flow chart of the general steps of the turbine blade analysis (300) is illustrated. It should be understood that the parenthetical references in the following description correspond to the reference numerals associated with the flowchart blocks shown in FIG. 3. First, control data is collected from a test blade hardware (310). Using the collected data, a model is created of the test blade hardware (320). Then, the test blade model is used to predict the effect of one or more modifications to blade thickness in discrete locations on the blade (330). Next, the discrete locations and thickness modifications which result in the desired blade frequencies are identified (340). The identified modifications are applied to the test blade model and a revised blade model is generated (350). The desired operability of the revised blade model is verified (360). Lastly, a revised blade hardware is constructed and tested (370). Each of these steps will now be discussed in detail.

The step of collecting control data from a test blade hardware (310) includes choosing a test blade hardware, and obtaining measurements of the test blade hardware while subjected to predetermined operating conditions and excitation sources. The test blade hardware may be any existing blade hardware that extends from any existing rotor; however, in one exemplary embodiment, the test blade hardware is a blade hardware that is known to be capable of operating within a range of rotational speeds while having its natural modes of vibration excited by known excitation sources at critical speeds. Alternatively, the test blade hardware is a blade hardware that was previously designed to incorporate the aforementioned characteristics and subsequently constructed.

Measurements are collected from the test blade hardware that relate to blade displacement when the test blade hardware is subjected to predetermined operating conditions and frequency data that indicate at which frequencies the test blade hardware vibrates while subjected to those same predetermined operating conditions. It will be appreciated that the data may be collected from an actual rotating blade or a virtual, model blade. With regard to the embodiment in which measurements are collected from an actual blade, the test blade hardware is placed into actual predetermined operating conditions, such as, for instance, on a turbomachine that is coupled to an aircraft or test stand. In another example, the actual blade is placed in a simulator that simulates actual predetermined operating conditions. In yet another exemplary embodiment, the virtual, model test blade is placed into a virtual, mathematical model representing predetermined operating conditions.

After the test blade, whether actual or virtual, is subjected to the predetermined operating conditions, it is subjected to excitation sources. Excitation sources may include a variety of different sources that may cause the test blade to vibrate during rotation. For instance, excitation sources may include, but are not limited to, aerodynamic pressure pulses from fluid passing over guide vanes or other structural elements that may be disposed proximate the control blade, or mechanical influences, such as gear teeth that may be coupled to the turbomachine. As with the predetermined operating conditions, the excitation sources may be either actual or modeled.

Data are collected that relate to the dynamic displacement of the test blade to the shaft rotational speed as the rotational speed is allowed to vary between the operational limits. The collected test blade data are typically discrete values that are subsequently processed, such as via a Fourier analysis, to determine the effect of the excitation sources on the test blade's natural modes of vibration. In one exemplary embodiment, the discrete values are inputted into a Fast Fourier Transform (FFT).

The FFT is solved for frequency spectra which mathematically represents the frequency response of the test blade. Then, the frequencies are used to identify which particular excitation sources produce an unacceptable affect on the test blade and whether the vibration frequencies experienced by the test blade fall within acceptable material limits. In this regard, results are obtained by plotting the frequencies on appropriate Campbell and/or Goodman diagrams.

Next, a model of the test blade is created (320). Any one of numerous types of mathematical models created in any one of numerous ways may be employed. In one example, a finite element analysis is performed to create a finite element model. Any one of numerous tools conventionally used for performing finite element analyses may be used, such as, for example computer programs, including, but not limited to ANSYS (distributed by ANSYS Inc. of Canonsburg, PA).

In the case in which ANSYS is used, first, the geometries of the test blade are translated into a CAD file, or any one of numerous other types of suitable file formats that are compatible for importing into the ANSYS program, or any other appropriate modeling program. In addition to modeling the test blade, the program is used to generate discrete data that map discrete locations over the topology of the test blade surface. Each discrete data contains data associated with the discrete location, including but not limited to information relating to the thickness of the particular predetermined test blade section and surface normal vector data. As will be appreciated, an increased number of discrete locations may increase the accuracy by which the resulting blade may be designed.

In one exemplary embodiment the test blade is represented by a finite element model, the modeled test blade is virtually inserted in a mathematical model representing predetermined operating conditions, similar to those previously mentioned above, to predict the behavior of the finite element model in those conditions. In another exemplary embodiment, the test blade is represented by a pre-existing mathematical model.

Next, the test blade model is used to predict the effect of blade thickness modifications in discrete locations on the blade and the discrete locations and thickness modifications that result in the desired blade frequency are determined (330, 340). In this regard, first, the thicknesses of the modeled test blade are modified at each discrete location. In one exemplary embodiment, the thicknesses of more than one discrete location are modified. The modified discrete locations may or may not represent adjacent discrete locations. It will be appreciated that the thickness modification may be a thinning or thickening of the test blade.

Then, the effect of a thickness modification at one discrete location is observed in relation to the remainder of the test blade. The test blade may be modified to an acceptable lower blade thickness limit and gradually thickened to a suitable upper blade thickness limit. Data related to the effects of each modification made to the discrete location, including thickness modification data and frequency data, are collected. Modifications and data collection are repeated for each discrete location until a sufficient number of records containing the desired prediction data is generated. The modifications and data collection may be performed using any one of numerous tools suitable for predicting the dynamic behavior of a mechanical system, such as, for example, using the finite model described above, or the perturbation analyses described below.

In an exemplary embodiment, the perturbation analyses (modeling and frequency solution) is performed to establish sensitivity coefficients, $A_{ij}$, which are used to determine the change in frequency of mode i subject to a unit change in thickness at location j. The following relationship is used:

$$\begin{Bmatrix} \Delta f'_{i,1} \\ \Delta f'_{i,2} \\ \cdots \\ \Delta f'_{i,M} \end{Bmatrix} = \begin{bmatrix} \Delta t_{1,1} & \Delta t_{2,1} & \cdots & \Delta t_{N,1} \\ \Delta t_{1,2} & \Delta t_{2,2} & \cdots & \Delta t_{N,2} \\ \Delta t_{1,3} & \Delta t_{2,3} & \cdots & \Delta t_{N,3} \\ \cdots & \cdots & \cdots & \cdots \\ \Delta t_{1,M} & \Delta t_{2,M} & \cdots & \Delta t_{N,M} \end{bmatrix} \begin{Bmatrix} A_{i,1} \\ A_{i,2} \\ \cdots \\ A_{i,N} \end{Bmatrix} \qquad (1)$$

or

$$\Delta f'_{i,k} = \sum_{j=1}^{N} A_{i,j} \Delta t_{j,k} \qquad (1a)$$

where $\Delta f'_{i,k}$ is the measured or calculated frequency of mode i, relative to the test blade frequency for perturbation case k;
$\Delta t_{j,k}$ is the incremental thickness, positive or negative, applied at blade location j for perturbation case k;
$A_{i,j}$ is the sensitivity coefficient for mode i and blade location j;
N is the number of discrete blade locations considered;
and M is the number of independent perturbation cases analyzed.

The perturbed thickness distribution $\Delta t_{j,k}$ can be established at random or by deterministic means and is preferably selected to be no more than a small percentage of the test blade thickness, such as between about 5% and 10%. Sufficient measurements are preferably taken, typically M»N, to achieve stability of the sensitivity coefficients $A_{ij}$. Once a satisfactory number of cases have been processed, the sensitivity coefficients are calculated using a suitable regression analysis (least squares or response surface). A separate regression is used for each mode to obtain regression data. It will be appreciated that although exemplary equations are provided herein representing an exemplary perturbation analysis, any one of numerous other suitable equations may be used as well.

A predictive model is derived from the regression data. Once derived, the sensitivity coefficients are used as a predictive tool to assess the effect of any arbitrary-chosen thickness distribution on the frequencies of any or all of the modes considered in the regression. The relationship is given by the following equation:

$$\Delta f_i = \sum_{j=1}^{N} A_{ij} \Delta t_j \qquad (2)$$

where $\Delta t_j$ is the incremental thickness, positive or negative, applied at blade location j;
N is the number of discrete blade locations defined;
$A_{ij}$ are the previously calculated sensitivity coefficients;
and $\Delta f_i$ is the incremental frequency of mode i, relative to the test blade frequency.

Introducing the relationship between the design variables, $u_1$, and the discrete blade locations, $\Delta t_j$

$$\Delta t_j = D_{j,l} u_l \qquad (3)$$

Substituting equations (3) into equation (2)

$$\Delta f_i = \sum_{j=1}^{N} A_{ij} D_{jl} u_l \qquad (4)$$

Equation (4) thus relates the predicted change in frequency for mode i to the incremental thickness applied to the blade expressed in terms of the design variables $u_1$. It will be appreciated that although exemplary equations are provided herein representing an exemplary predictive model, any one of numerous other suitable equations may be used as well.

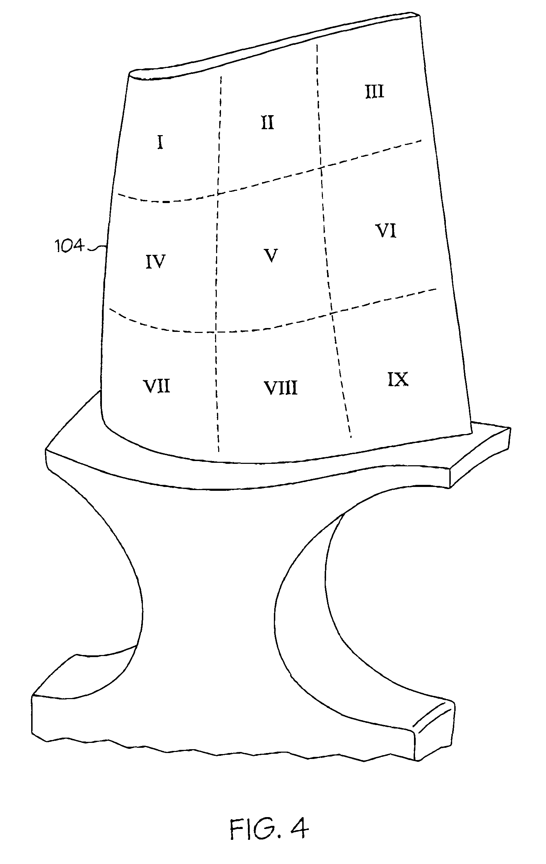

The collected prediction data is analyzed to determine one or more desirable discrete locations and an optimum thickness modification. The number of discrete blade locations considered in the regression analysis mentioned above may be too numerous to be independently manipulated. Thus, preferably, relationships are created between logical groupings of the discrete blade locations, also referred to herein as "design variables", in order to reduce the design space to a practical and usable level. In one exemplary embodiment, contour plots of the sensitivity coefficients, $A_{ij}$, are created and overlaid onto a blade planform to assist in establishing the design variables. For example, such as illustrated in FIG. 4, the blade 104 planform is subdivided into a 3 x 3 conformal grid to create nine grid regions, wherein each discrete blade location is assigned membership to one of the nine grid regions. It will be appreciated that the blade planform may be subdivided into more or fewer grids. Potential thickness modifications may be restricted to a uniform value within a grid region but may vary between regions.

In one exemplary embodiment, the subset of the modes for which regression was performed and sensitivity coefficients calculated are included in the optimization. In yet another embodiment, constraints are imposed that require shifting the frequencies of the problematic responses to a predetermined ideal value, e.g., a value outside normal operating range, while the frequencies of non-problematic modes remain unperturbed. In still yet another embodiment, multi-objective optimization techniques are used to determine a suitable thickness distribution.

After the optimal discrete location and thickness are determined, the appropriate modifications are applied to the blade model and a revised blade model is generated (350). Preferably, the first side 118, second side 120, leading edge 114, and trailing edge 116 of the revised blade model blend smoothly and continuously after the thickness modifications have been applied thereto. In one exemplary embodiment, a Lagrangian interpolation is used to generate a smooth surface through points in the revised blade model representing the revised blade's surfaces, however, it will be appreciated that any other similar method may be employed as well.

Next, a finite element model is constructed of the revised blade model, and subsequently, the desired operability of the revised blade model is verified (360). The revised blade model may also be subjected to a computational fluid dynamics analysis to determine whether the revised blade model aerodynamic behavior matches the behavior of the original predicted blade behavior. In one exemplary embodiment, the same geometric definition of the blade is prescribed in an analysis package for predicting fluid dynamic behavior, for example computer program, including but not limited to, Fluent (distributed by Fluent Inc. of Lebanon, NH) or CFX (distributed by ANSYS Inc. of Canonsburg, PA). The analysis is used to predict how the modified blade surfaces will impact the aerodynamic behavior of the revised blade, which can be compared to a prediction of the aerodynamic behavior of the original blade. If the aerodynamic behavior is unacceptable, the thickness distribution can be revised slightly until an acceptable value between vibrational behavior and aerodynamic behavior are simultaneously achieved.

Lastly, a revised blade hardware is constructed from the revised blade model and the revised blade hardware is tested (370). The revised blade hardware is subjected to the same operating conditions as the test blade hardware and strain gauge measurements are taken of the revised hardware. The revised strain measurements are matched against the desired predicted test blade behavior. If the measurements do not result in the desired blade response, the turbine blade analysis (300) is repeated.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A turbomachine wheel (100) comprising:

   a hub (102); and
   a plurality of blades (104) extending from the hub, each blade having a base (110), a tip (112), a leading edge (114), a trailing edge (116), a first side (118), a second side (120), and a thickness between the first (118) and second (120) sides, wherein the thickness of one or more of the blades varies between the base (110) and tip (112) to thereby tune the blade to at least one predetermined frequency.

**2.** The turbomachine wheel (100) of claim 1, wherein a first blade of the plurality of blades has a different shape than a second blade of the plurality of blades.

**3.** The turbomachine wheel (100) of claim 1, wherein each blade (104) of the plurality of blades has a similar shape as another blade of the plurality of blades.

**4.** A method of determining a blade topology that reduces the effects of vibratory stress on a turbomachine blade (104) having a plurality of discrete locations, wherein each discrete location has a thickness, the method comprising:

creating a computational model of the blade;
using the computational model to modify the thickness of at least one of the discrete locations a predetermined amount;
determining a combination of a discrete location and predetermined thickness amount that reduces vibratory stress on the blade; and
applying the determined combination to the computational model to create a revised blade.

**5.** The method of claim 4, further comprising:

subjecting the blade (104) to a predetermined operating environment and at least one excitation source; and
collecting measurements of the blade.

**6.** The method of claim 4, wherein the step of creating comprises:

generating a finite element model of the blade.

**7.** The method of claim 4, wherein the thicknesses of more than one discrete locations are modified.

**8.** The method of claim 4, wherein thicknesses of a first and a second discrete location are each modified and the first and second discrete locations are adjacent to one another.

**9.** The method of claim 4, wherein thicknesses of a first and a second discrete location are each modified and the first and second discrete locations are not adjacent to one another.

**10.** The method of claim 4, wherein the step of determining comprises performing a perturbation analysis to establish sensitivity coefficients.

FIG. 1

FIG. 2

START

COLLECT DATA FROM TEST BLADE — 310

CREATE MODEL OF TEST BLADE FROM COLLECTED DATA — 320

USE MODEL TO PREDICT EFFECT OF MODIFYING BLADE THICKNESS IN DESCRETE LOCATIONS — 330

DETERMINE DESCRETE LOCATION AND THICKNESS MODFICATION THAT RESULTS IN DESIRED BLADE FREQUENCY — 340

APPLY MODIFICATIONS TO MODEL OF TEST BLADE TO GENERATE REVISED BLADE MODEL — 350

VERIFY REVISED BLADE MODEL OPERATES AS DESIRED — 360

CONSTRUCT AND TEST REVISED BLADE HARDWARE — 370

END

FIG. 3

FIG. 4

**EP 1 645 720 A1**

**European Patent Office**

**EUROPEAN SEARCH REPORT**

Application Number

EP 05 25 6226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 211 382 A (UNITED TECHNOLOGIES CORPORATION) 5 June 2002 (2002-06-05) * the whole document * | 1-10 | F01D5/14 F01D5/16 |
| X | US 5 286 168 A (SMITH ET AL) 15 February 1994 (1994-02-15) * the whole document * | 1-10 | |
| X,P | EP 1 528 223 A (ROLLS-ROYCE PLC) 4 May 2005 (2005-05-04) * paragraphs [0001], [0082] - [0087]; figures 1,9,10 * | 1-10 | |
| X,P | EP 1 510 652 A (GENERAL ELECTRIC COMPANY) 2 March 2005 (2005-03-02) * paragraphs [0001] - [0005], [0021]; figures 2,4-6 * | 1-3 | |
| A | US 5 724 271 A (BANKERT ET AL) 3 March 1998 (1998-03-03) * abstract * | 4,6 | TECHNICAL FIELDS SEARCHED (IPC) |
| A | PATENT ABSTRACTS OF JAPAN vol. 016, no. 568 (P-1458), 9 December 1992 (1992-12-09) & JP 04 218732 A (HITACHI LTD), 10 August 1992 (1992-08-10) * abstract * | 10 | F01D |

The present search report has been drawn up for all claims

| Place of search | Date of completion of the search | Examiner |
|---|---|---|
| Munich | 20 February 2006 | Chatziapostolou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 6226

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2006

| Patent document cited in search report | | Publication date | Patent family member(s) | | Publication date |
|---|---|---|---|---|---|
| EP 1211382 | A | 05-06-2002 | JP<br>US | 2002188404 A<br>2002064458 A1 | 05-07-2002<br>30-05-2002 |
| US 5286168 | A | 15-02-1994 | JP | 5256102 A | 05-10-1993 |
| EP 1528223 | A | 04-05-2005 | US | 2005096891 A1 | 05-05-2005 |
| EP 1510652 | A | 02-03-2005 | CN<br>JP<br>US | 1598248 A<br>2005076634 A<br>2005047919 A1 | 23-03-2005<br>24-03-2005<br>03-03-2005 |
| US 5724271 | A | 03-03-1998 | NONE | | |
| JP 04218732 | A | 10-08-1992 | JP | 3038500 B2 | 08-05-2000 |

EPO FORM P0459

For more details about this annex : see Official Journal of the European Patent Office, No. 12/82